# NEUE EUROPÄISCHE PATENTSCHRIFT

(11) **EP 2 402 472 B2**
(45) Veröffentlichungstag und Bekanntmachung des Hinweises auf die Entscheidung über den Einspruch: **15.11.2017**
(45) Hinweis auf die Patenterteilung: 08.01.2014
(21) Anmeldenummer: 10168353.0
(22) Anmeldetag: 02.07.2010
(51) Int. Cl.: C22C 38/04, C22C 38/06, C22C 38/24, C22C 38/26, C21D 7/02, C21D 9/50

(54) **Höherfester, kaltumformbarer Stahl und aus einem solchen Stahl bestehendes Stahlflachprodukt**
High-tensile, cold formable steel and flat steel product composed of such steel
Acier à résistance élevée pouvant être déformé à froid et produit plat en acier constitué d'un tel acier

(43) Veröffentlichungstag der Anmeldung: 04.01.2012
(73) Patentinhaber: ThyssenKrupp Steel Europe AG, 47166 Duisburg (DE)
(72) Erfinder: Becker, Jens-Ulrik Dr.-Ing., 47058 Duisburg (DE); Göklü, Sinasi Dr.-Ing., 45529 Hattingen (DE); Hofmann, Harald Dr.-Ing., 44357 Dortmund (DE); Höckling, Christian, 47058 Duisburg (DE); Schirmer, Matthias Dipl.-Ing., 40235 Düsseldorf (DE); Thomas, Ingo Dr., 47119 Duisburg (DE)
(74) Vertreter: Cohausz & Florack

(56) Entgegenhaltungen:
- EP-A1- 1 067 203
- EP-A1- 2 090 668
- EP-A1- 2 208 803
- EP-A2- 2 383 353
- EP-A2- 2 431 492
- WO-A1-97/24467
- WO-A1-2003/025240
- WO-A1-2006/048034
- WO-A1-2007/075006
- WO-A1-2008/078940
- WO-A1-2009/084792
- WO-A1-2009/084793
- WO-A1-2009/095264
- DE-A1- 2 927 091
- DE-A1- 19 900 199
- DE-A1-102004 061 284
- DE-B- 1 032 296
- DE-C1- 10 164 610
- GB-A- 876 723
- JP-A- S6 036 647
- JP-A- S6 335 758
- US-A- 5 431 753
- US-A1- 2008 035 249
- SAHU P ET AL: "Stability of austenite and quasi-adiabatic heating during high-strain-rate deformation of twinning-induced plasticity steels" SCRIPTA MATERIALIA, ELSEVIER, AMSTERDAM, NL LNKD- DOI:10.1016/J.SCRIPTAMAT.2009.09.010, Bd. 62, Nr. 1, 1. Januar 2010 (2010-01-01) , Seiten 5-8, XP026705974 ISSN: 1359-6462 [gefunden am 2009-09-11]
- LYNCH ET AL: "Metal-induced embrittlement of materials" MATERIALS CHARACTERIZATION, ELSEVIER, NEW YORK, NY, US LNKD- DOI:10.1016/1044-5803(92)90017-C, Bd. 28, Nr. 3, 1. April 1992 (1992-04-01), Seiten 279-289, XP025997439 ISSN: 1044-5803 [gefunden am 1992-04-01]
- SCOTT C. ET AL: 'Vanadium additions in new ultra high strength and ductility steels.' PROC. ISAS 2009 2009,
- BLECK W. ET AL: 'Microstructre and Texture in Steels', Bd. CHPT. 9, 2009, SPRINGER, LONDON Seiten 145 - 163

## Beschreibung

Die Erfindung betrifft einen höherfesten, kaltumformbaren Stahl mit hohem Mangan-Gehalt, der eine gute Resistenz gegen eine durch Wasserstoff induzierte verzögerte Rissbildung und eine besonders gute Schweißbarkeit besitzt. Darüber hinaus betrifft die Erfindung aus einem solchen Stahl hergestellte Stahlflachprodukte.

Die Wasserstoff-induzierte "verzögerte Rissbildung" wird durch von außen in den Stahlwerkstoff eindringenden Wasserstoff verursacht. Dagegen spricht man von einer "Delayed Fracture", wenn das Versagen des Stahlwerkstoffs durch im Material erzeugungsbedingt vorliegenden Wasserstoff verursacht wird.

Die eingangs genannte Eigenschaftskombination wird insbesondere von Stählen gefordert, die für die Herstellung von Karosseriebauteilen für Kraftfahrzeuge verwendet werden. Gerade dort besteht die Forderung, dass die Bleche, aus denen die Bauteile gefertigt werden, bei einem optimal geringen Gewicht nicht nur gut verformbar sind, sondern auch eine ausreichende Festigkeit besitzen, um bei geringen Blechdicken einen effektiven Beitrag zur Stabilität der jeweiligen Karosserie zu leisten.

Darüber hinaus muss bei für Karosseriebauteile und vergleichbare Anwendungen bestimmten Stählen sichergestellt sein, dass sie gut schweißbar sind und insbesondere nicht zu einer durch die im Zuge des Schweißens eintretenden Rissbildung im Bereich der jeweiligen Schweißstelle ("Lotrissigkeit")neigen.

Mit "Lotrissigkeit" ist eine Schwächung von Korngrenzen durch ein die Korngrenzen infiltrierendes Medium (z. B. Zink aus Beschichtung, Cu aus Schweißzusatzwerkstoff) bezeichnet, die aufgrund von Abkühlspannungen zu Rissen führen kann. So kann es beispielsweise beim Verschweißen von verzinkten Blechen dazu kommen, dass das als Korrosionsschutzbeschichtung auf das Stahlblechsubstrat aufgetragene Zink in Folge der hohen Schweißtemperaturen aufschmilzt und an Korngrenzen in das Stahlblech eindringt. Bei der anschließenden Abkühlung treten an diesen Korngrenzen Spannungen auf, die interkristalline Risse verursachen können.

Schließlich dürfen für Karosseriebauteile eingesetzte Stähle trotz einer für die Formgebung des jeweiligen Bauteils gegebenenfalls erforderlichen mehrfachen Kaltumformung auch nach einer langen Einsatzdauer unter den im praktischen Einsatz auftretenden Lasten nicht zur Bildung von Wasserstoff-induzierten Rissen, der so genannten "verzögerten Rissbildung", neigen, die gefährliche Folgen für die Festigkeit und Stabilität des Bauteils und der mit ihm hergestellten Karosserie nach sich ziehen könnte.

Es ist eine große Zahl von Versuchen bekannt, für den Karosseriebau und vergleichbare Anwendungsgebiete Stähle zur Verfügung zu stellen, die eine gute Verformbarkeit und mechanische Eigenschaften besitzen, die im Hinblick auf die beabsichtigte Verwendung optimiert sind.

Ein erstes Beispiel für einen solchen Leichtstahl ist in der WO 2007/075006 A1 beschrieben. Der dort vorgestellte Stahl enthält neben Fe und unvermeidbaren Verunreinigungen (in Gew.-%) 0,2 - 1,5 % C, 10- 25 % Mn, 0,01 - 3,0 % Al, 0,005 - 2,0 % Si, bis zu 0,03 % P, bis zu 0,03 % S und bis zu 0,040 % N sowie jeweils optional 0,1 - 2,0 % Cr, 0,0005 - 0,01 % Ca, 0,01 - 0,1 % Ti, 0,001 - 0,020 % B. Der derart legierte Stahl soll bei hoher Zähigkeit, hoher Festigkeit und verminderter Rissanfälligkeit eine optimale Verformbarkeit besitzen. Darüber hinaus soll er besonders gut mit einem vor Korrosion schützenden Überzug beschichtbar sein.

Ein anderer Stahl, der eine optimierte Verformbarkeit, Festigkeit und Schweißbarkeit besitzen soll, ist aus der WO 93/13233 A1 bekannt. Dieser Stahl enthält neben Eisen und unvermeidbaren Verunreinigungen (in Gew.-%) bis zu 1,5 % C, 15 - 35 % Mn, 0,1 - 6,0 % Al, sowie jeweils optional bis zu 0,6 % Si, bis zu 5 % Cu, bis zu 1 % Nb, bis zu 0,5 % V, bis zu 0,5 Ti, bis zu 9 % Cr, weniger als 4,0 % Ni und weniger als 0,2 % N. Der optionalen Zugabe von bis zu 9 Gew.-% Cr wird in der WO 93/13233 A1 eine austenit-stabilisierende und festigkeitssteigernde Wirkung zugeschrieben. Dieselbe Wirkung sollen Gehalte an Ni, Ti und V in dem bekannten Stahl haben. Bei den in der WO 93/13233 A1 als erfindungsgemäß angegebenen Ausführungsbeispielen, die nennenswerte Cr-Gehalte in Kombination mit Gehalten an Nb, Ti oder V aufweisen, sind gleichzeitig jeweils hohe Al-Gehalte von mehr als 3 Gew.-% vorgesehen. Al wird in der WO 93/13233 A1 in Gehalten von 0,1 - 6,0 Gew.-% als besonders wichtig in Bezug auf die Austenit-Stabilisierung, die Kaltverarbeitbarkeit und Pressverformbarkeit angesehen.

In der WO 2007/074994 A1 ist ebenso ein Stahl für Anwendungen im Bereich des Automobilbaus beschrieben, der eine hohe Zähigkeit und Festigkeit besitzen soll. Dieser Stahl enthält neben Eisen und unvermeidbaren Verunreinigungen (in Gew.-%) 0,1 - 1,5 % C, 5 - 35 % Mn, 0,01 - 3 % Al, sowie jeweils optional weniger als 3 % Si, weniger als 9 % Cr, weniger als 5 % Cu, weniger als 4 % Ni, weniger als 1 % Mo, weniger als 1 % Nb, weniger als 0,5 % V sowie weniger als 0,04 % N. Darüber hinaus können in dem Stahl ebenso optional Sn, Sb, As und Te in Gehalten von jeweils 0,005 - 0,05 %, B, La und Ce in Gehalten von jeweils 0,0005 - 0,040 %, Zr und Ti in Gehalten von jeweils 0,0005 - 0,1 % und Ca in Gehalten von 0,0005 - 0,03 % vorhanden sein. Durch die Anwesenheit von Al in Gehalten von 0,01 - 3,0 Gew.-% soll dabei die Zähigkeit des Stahls verbessert sein, indem Al den Ferrit-Anteil des Stahls stabilisert und die Entstehung von ε-martensit unterdrückt. Bis zu 3 Gew.-% Si kann in dem bekannten Stahl vorhanden sein, um die Zugfestigkeit des Stahls zu verbessern. Dabei ist der Si-Gehalt auf maximal 3 Gew.-% beschränkt, um Oberflächenfehler zu vermeiden und eine gute Schweißbarkeit zu gewährleisten. Cr kann in dem bekannten Stahl vorhanden sein, um die Korrosionsbeständigkeit des Stahls zu verbessern und seine gute Verformbarkeit zu gewährleisten. Nb und V können in dem bekannten Stahl zur Optimierung der Festigkeit vorhanden sein. Keines der in der WO 2007/074994 A1 vorgestellten Ausführungsbeispiele enthält jedoch Gehalte an Cr in Kombination mit nennenswerten Gehalten an Al, Nb oder V.

Aus der WO 95/26423 A1 ist ebenfalls ein Stahl mit hohen Mn-Gehalten bekannt, der eine verbesserte Verarbeitbarkeit aufweisen soll. Dieser Stahl enthält neben Eisen und unvermeidbaren Verunreinigungen (in Gew.-%) weniger als 1,5 % C, 15 - 35 % Mn, 0,1 - 6 % Al sowie mindestens eines der Elemente Si, Cu, Nb, V, Cr, Ni, N, B, Ti, Zr, La, Ce oder Ca mit der Maßgabe, dass der Si-Gehalt max. 0,6 %, der Cu-Gehalt max. 5 %, der Nb-Gehalt max. 1,0 %, der V-Gehalt max. 0,5 %, der Cr-Gehalt max. 9,0 %, der Ni-Gehalt max. 4,0 %, der N-Gehalt max. 0,2 % sowie der B-Gehalt 0,0005 - 0,04 %, der Ti- und Zr-Gehalt jeweils 0,0005 - 0,05 0%, der La- und Ce-Gehalt jeweils 0,005- 0,040 % und der Ca-Gehalt 0,0005 - 0,030 % beträgt. Die in der WO 95/26423 beschriebenen Wirkungen der einzelnen Legierungselemente entsprechen den Wirkungen, die in den voranstehend gewürdigten Dokumenten erläutert worden sind.

Aus der EP 2 090 668 A1 ist ebenfalls eine Legierungsvorschrift für einen Stahl bekannt, der vergleichbar mit den voranstehend erläuterten Stählen neben Eisen und unvermeidbaren Verunreinigungen (in Gew.-%) 0,05 - 0,78 % C, 11 - 23 % Mn aufweist und jeweils bis zu 5 % Al und Cr, bis zu 2,5 % Ni, bis zu 5 % Si und bis zu 0,5 % V enthalten kann. Gemäß den in der EP 2 090 668 A1 angegebenen Ausführungsbeispielen wird dabei jeweils entweder ein hoher Al-Gehalt mit einem niedrigen Cr-Gehalt oder ein hoher Cr-Gehalt mit einem niedrigen Al-Gehalt kombiniert. Obwohl die festigkeitssteigernde Wirkung von V in der Beschreibung der EP 2 090 668 A1 erwähnt ist, enthält zudem keines der Ausführungsbeispiele dieses oder ein anderes Mikrolegierungselement.

Des Weiteren ist aus der DE 10 2004 061 284 A1 ein Verfahren zum Erzeugen von Warmbändern aus einem umformbaren, gut kalt tiefziehfähigen Leichtbaustahl bekannt, der aus Eisen und unvermeidbaren sowie (in Masse-%) 0,04 bis 1,0 % C, 0,05 - 4,0 % Al, 0,05 - 6,0 % Si und 9,0 - 30,0 % Mn besteht. Die entsprechend zusammengesetzte Schmelze wird in einer horizontalen Bandgießanlage endabmessungsnah sowie strömungsberuhigt und biegefrei zu einem Vorband mit einer Dicke von 6 - 15 mm vergossen und anschließend einer Weiterbehandlung zugeführt.

Aus der US 5,431,753 A1 ist zudem ein Stahl mit hohen Mn-Gehalten bekannt, der bei einer guten Verformbarkeit und Festigkeit auch eine gute Schweißeignung besitzen soll. Der Stahl enthält dazu (in Gew.-%) bis zu 1,5 % C, 15 - 35 % Mn, 0,1 - 6,0 % Al sowie ein Element oder mehrere Elemente aus der Gruppe "Si, Cu, Nb, V, Ti, Cr, Ni, N" mit der Maßgabe, dass der Si-Gehalt höchstens 0,6 %, der Cu-Gehalt höchstens 5,0 %, der Nb-Gehalt höchstens 1 %, der V-Gehalt höchstens 0,5 %, der Ti-Gehalt höchstens 0,5 %, der Cr-Gehalt höchstens 9,0 %, der Ni-Gehalt höchstens 4,0 % und der N-Gehalt höchstens 0,2 % beträgt, Rest Eisen und unvermeidbare Verunreinigungen. Um die angestrebte Eigenschaftskombination zu sichern, sollen die Austenitkörner dabei weniger als 40,0 µm groß sein.

Schließlich ist in der WO 2009/084792 A1 ein Stahl mit hohen Mn-Gehalten beschrieben, der neben Eisen und unvermeidbaren Verunreinigungen (in Gew.-%) 0,3 - 0,9 % C, unvermeidbaren Verunreinigungen (in Gew.-%) 0,3 - 0,9 % C, 15 - 25 % Mn, 0,01 - 2,0 % Si, 0,01 - 4,0 % Al, bis zu 0,05 % S, bis zu 0,1 % P sowie mindestens ein Element der Gruppe Nb, V, Ti, W, Mo, Cr mit der Maßgabe enthält, dass der Nb-Gehalt weniger als 0,2 %, der V-Gehalt weniger als 0,5 %, der Ti-Gehalt weniger als 0,3 % und der W-, Mo- und Cr-Gehalt jeweils weniger als 1 % beträgt. Die Anwesenheit von Ti soll dabei die Schweißbarkeit dieses bekannten Stahls verbessern. Dagegen ist der Cr-Gehalt auf max. 1 % beschränkt, weil höhere Gehalte an Cr-Gehalte keine festigkeitssteigernde Wirkung haben sollen und somit nur zu einer Erhöhung der Legierungskosten führen würden.

Vor dem Hintergrund des voranstehend zusammengefassten Standes der Technik bestand die Aufgabe der Erfindung darin, einen Stahl und daraus hergestellte Stahlflachprodukte anzugeben, bei denen eine optimale Kombination aus Schweißbarkeit und geringer Neigung zur verzögerten Bildung von Rissen bei guter Festigkeit, Warm- und Kaltverformbarkeit gesichert ist.

In Bezug auf den Stahl ist diese Aufgabe erfindungsgemäß durch einen gemäß Anspruch 1 zusammengesetzten Stahl gelöst worden.

In Bezug auf das Stahlflachprodukt besteht die erfindungsgemäße Lösung der oben genannten Aufgabe in der Lehre von Anspruch 9.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer höherfester, kaltumformbarer Stahl enthält demnach neben Eisen und unvermeidbaren, herstellungsbedingten Verunreinigungen (in Gew.-%) 0,3 - 0,5 % C, 17 - 22 % Mn, 0,2 - 0,5 % Si, 0,3 - 2 % Al, 1,5 - 2,5 % Cr, < 0,03 % S, < 0,08 % P, < 0,1 % N, < 2 % Mo, < 0,01 % B, < 5 % Cu, bis zu 0,015 % Ca, und mindestens ein Element aus der Gruppe "V, Nb" mit der Maßgabe, dass der jeweilige Nb-Gehalt 0,01 - 0,5 % und der jeweilige V-Gehalt 0,01 - 0,5 % beträgt, sowie optional 0,01 - 0,5 % Ti.

Erfindungsgemäßer Stahl und dementsprechend auch aus erfindungsgemäßem Stahl gefertigte Flachprodukte, wie Stahlbleche oder -bänder, weisen ein austenitisches Gefüge auf und können TWIP- und TRIP-Eigenschaften besitzen.

Zur Stabilisierung des Austenitgefüges des erfindungsgemäßen Stahls trägt sein C-Gehalt von mindestens 0,3 Gew.-% bei. Auch können über den jeweiligen C-Gehalt des Stahls dessen TWIP- und TRIP-Eigenschaften gezielt beeinflusst werden, da Kohlenstoff die Stapelfehlerenergie erhöht. Des Weiteren wird durch die erfindungsgemäße Anwesenheit von C die Festigkeit erhöht, ohne dass es zu einem Verlust von Duktilität kommt. Bei C-Gehalten von mehr als 1 Gew.-% kann es jedoch zu einer Abnahme der Verformbarkeit kommen. Die angestrebte Wirkung des Kohlenstoffgehalts lässt sich in erfindungsgemäßem Stahl dann besonders sicher erzielen, wenn seine C-Gehalte auf einen Bereich von 0,3 - 0,5 Gew.-% beschränkt sind.

Mangan bewirkt in erfindungsgemäßem Stahl in an sich bekannter Weise die geforderte hohe Festigkeit und eine höhere Stapelfehlerenergie. Über die Gehalte an Mn lassen sich dementsprechend die TRIP- oder TWIP-Eigenschaften des erfindungsgemäßen Stahls einstellen. Darüber hinaus stellt die Anwesenheit hoher Gehalte an Mn sicher, dass der erfindungsgemäße Stahl das angestrebte austenitische Gefüge aufweist. Bei über 25 Gew.-% liegenden Mn-Gehalten tritt keine im Hinblick auf die hier interessierenden Eigenschaften wesentliche Verbesserung mehr ein. Stattdessen besteht die Gefahr, dass bei höheren Mangan-Gehalten die maximale Zugfestigkeit zurückgeht.

Geringere Mn-Gehalte erweisen sich in Bezug auf die Anfälligkeit gegenüber der verzögerten Rissbildung in Kombination mit den erfindungsgemäß vorgegebenen Al- und Si-Gehalten als besonders vorteilhaft. So führt ein Mn-Gehalt von bis zu 22 Gew.-%, zu einer deutlichen Absenkung des Korrosionspotenzials und wirkt der Wasserstoffaufnahme entgegen. Nach unten sind der Absenkung des Mn-Gehalts durch eine damit einhergehende Verschlechterung der Herstellbarkeit des Stahls und seiner Verarbeitbarkeit Grenzen gesetzt. Deshalb ist in einem erfindungsgemäßen Stahl der Mn-Gehalt auf 17 - 22 Gew.-% beschränkt.

Al und Si erhöhen in den erfindungsgemäß vorgegebenen Gehalten den Korrosionswiderstand und reduzieren die Neigung zur verzögerten Rissbildung. Schweißversuche haben des Weiteren gezeigt, dass bei erfindungsgemäßen Stählen die Gefahr der Lot- und Heißrissigkeit gegenüber bekannten Legierungskonzepten dadurch abgesenkt ist, dass die Al- und Si-Gehalte in den erfindungsgemäß vorgegebenen Bereichen gehalten sind. So sind dadurch, dass erfindungsgemäß der Gehalt an Aluminium auf 0,3 - 2 Gew.-% beschränkt ist und der Si-Gehalt max. 0,5 Gew.-% betragen darf, eine Schweißbarkeit des erfindungsgemäßen Stahls gewährleistet, die der von hochmanganhaltigen Stählen mit höheren Al- und Si-Gehalten überlegen ist. Dabei sind die Gehalte an Al und Si so beschränkt, dass der bei hohen Gehalten an Al und Si andernfalls bestehenden Gefahr zu kleiner Arbeitsbereiche beim Widerstandspunktschweißen begegnet ist. Die durch die erfindungsgemäße Anwesenheit von Si und Al in Kombination erzielten Effekte lassen sich dann besonders sicher nutzen, wenn der Al-Gehalt 0,5 - 1,5 Gew.-%, insbesondere 0,5 - 1,3 Gew.-%, und der Si-Gehalt bei 0,2 - 0,5 Gew.-% liegt.

Eine besondere Bedeutung kommt bei einem erfindungsgemäßen Stahl der Anwesenheit von Cr in Gehalten von 1,5 - 2,5 Gew.-% zu. Durch Cr wird das Korrosionspotenzial auf einem niedrigen Niveau gehalten, so dass der erfindungsgemäße Stahl einen hohen Widerstand gegen verzögerte Rissbildung aufweist. Zusätzlich bildet Cr mit dem im Stahl vorhandenen Kohlenstoff und Stickstoff Ausscheidungen, die durch die Anlagerung von Wasserstoff der verzögerten Rissbildung entgegenwirken. Zu diesem Zweck enthält ein erfindungsgemäßer Stahl bevorzugt einen Cr-Gehalt von mindestens 1,7 Gew.-%, insbesondere mindestens 1,8 Gew.-%. Dabei ist die Obergrenze des Cr-Gehalts auf höchstens 2,5 Gew.-%, insbesondere höchstens 2,2 Gew.-%, beschränkt. Durch die erfindungsgemäß vorgegebene Obergrenze der Cr-Gehalte ist einerseits sichergestellt, dass sich keine größeren Mengen an Cr-Karbiden bilden, die die mechanischen Eigenschaften (Festigkeit-Bruchdehnungs-Relation) verschlechtern würden. Bei unterhalb der erfindungsgemäß vorgegebenen Grenze liegenden Cr-Gehalten wirkt Cr andererseits nicht mehr reduzierend auf die Neigung zur verzögerten Rissbildung.

Erfindungsgemäßer Stahl enthält mindestens eines der Mikrolegierungselemente Vanadium und Niob, wodurch die Voraussetzungen für eine optimale Feinkörnigkeit des Gefüges von aus erfindungsgemäßem Stahl gefertigten Stahlflachprodukten (Blech, Band) geschaffen sind. V und Nb erlauben die Erzeugung eines superfeinkristallinen Gefüges mit einer hohen Dichte an V- bzw. Nb-Ausscheidungen (VC, VN, VCN, NbC, NbN, NbCN, VNbC, VNbN, VNbCN) und einem großen Widerstand gegen Lotrissbildung. Die Größe der bei einem erfindungsgemäßen Stahl auf diesem Wege erhaltenen Körner ist dabei deutlich feiner als bei den derzeit auf dem Markt befindlichen austenitischen hochmanganhaltigen Stählen. So kann für ein aus erfindungsgemäßem Stahl kaltgewalztes Stahlflachprodukt (Blech, Band) eine Gefügefeinheit garantiert werden, die mindestens ASTM 13 entspricht, in der Regel feiner als ASTM 14 ist. Dabei konnte anhand von praktischen Versuchen gezeigt werden, dass die Feinkörnigkeit eines erfindungsgemäßen Stahlflachproduktes regelmäßig mindestens ASTM 14 entspricht, wobei in der überwiegenden Zahl der Fälle ein noch feineres Gefüge erhalten wird, das die Anforderung der ASTM 15 erfüllt.

Erfindungsgemäßer Stahl lässt sich jedoch nicht nur im kaltgewalzten Zustand weiterverarbeiten, sondern eignet sich auch für eine Weiterverarbeitung als warmgewalztes Stahlflachprodukt. Da die Dicke solcher Warmwalzprodukte (Blech, Band) in der Regel größer ist als die von kaltgewalzten Stahlflachprodukten, schwächen Lotrisse, die im Bereich von Schweißstellen auftreten können, warmgewalzte Stahlflachprodukte weniger stark als am Kaltband. Entscheidend ist dabei das Verhältnis Risslänge zu Materialstärke. Deshalb ist es in vielen Fällen ausreichend, wenn bei einem warmgewalzten, ohne zusätzliches Kaltwalzen der Weiterverarbeitung zu einem Bauteil zugeführten erfindungsgemäßen Stahlflachprodukt das Korn nicht so fein ist wie bei einem kaltgewalzten erfindungsgemäßen Blech oder Band. Die für erfindungsgemäße Warmwalzprodukte ausreichende Korngröße ist daher mit ASTM 11 oder feiner vorgegeben, wobei sich selbstverständlich ein feineres, ASTM 12 oder mehr entsprechendes Gefüge einstellen lässt.

Das durch die erfindungsgemäße Legierung erzielte besonders feine Gefüge ergibt die angestrebte optimale Kombination aus Schweißbarkeit und geringer Neigung zur verzögerten Bildung von Rissen bei guter Festigkeit, Warm- und Kaltverformbarkeit. Das gilt in gleichem Maße für aus erfindungsgemäßem Stahl erzeugtes Warm- und Kaltband. Besonders hervorzuheben ist die lotrissigkeitsminimierende Wirkung des feinen Gefüges, welches sich in Folge der erfindungsgemäßen Zusammensetzung mit optimaler Betriebssicherheit reproduzieren lässt.

Die positiven Effekte von Nb und V auf die Feinkörnigkeit des Gefüges eines erfindungsgemäß zusammengesetzten Stahls können genutzt werden, wenn Vanadium oder Niob jeweils alleine oder in Kombination miteinander im erfindungsgemäßen Stahl vorhanden sind.

Eine erste Variante des erfindungsgemäßen Stahls enthält dementsprechend mindestens 0,01 Gew.-% bis 0,5 Gew.-% Niob und allenfalls den Verunreinigungen zuzurechnende und somit legierungstechnisch unwirksame Spuren an Vanadium.

Eine zweite Variante der erfindungsgemäßen Legierung weist dagegen Gehalte an Nb auf, die allenfalls im Bereich der Verunreinigungen liegen, während die erfindungsgemäß vorgesehene Feinkörnigkeit des Gefüges durch mindestens 0,01 Gew.-% und höchstens 0,5 Gew.-% betragende Gehalte an Vanadium sichergestellt wird.

Bei einer dritten Variante der Erfindung sind Vanadium und Niob in Kombination im erfindungsgemäßen Stahl vorhanden, wobei die Gehalte an diesen Elementen in Summe jeweils mindestens 0,01 Gew.-% betragen, jedoch 0,5 Gew.-% nicht überschreiten.

Besonders sicher treten die durch die Anwesenheit von Nb und/oder V erfindungsgemäß erzielten Effekte dann ein, wenn die Summe der Gehalte an Nb und V in einem erfindungsgemäß legierten Stahl 0,03 - 0,3 Gew.-% beträgt, insbesondere über 0,05 Gew.-% liegt.

Titan bildet als Mikrolegierungselement in erfindungsgemäßem Stahl ebenfalls Ausscheidungen, die zur Feinkörnigkeit beitragen und die mechanischen Eigenschaften des Stahls positiv beeinflussen können. Allerdings ist Titan in Bezug auf die Einstellung eines feinkörnigen Gefüges weniger wirksam als die erfindungsgemäß für diesen Zweck zugegebenen Legierungselemente Niob oder Vanadium. Eine die Wirkung dieser Elemente optimal unterstützende Wirkung von Titan in erfindungsgemäßem Stahl ergibt sich bei Ti-Gehalten von mindestens 0,01 Gew.-%. Bei zu hohen Gehalten an Ti können sich grobe TiC-Partikel bilden, von denen beim Kaltwalzen und Kaltumformen von aus erfindungsgemäßem Stahl gefertigten Flachprodukten Risse ausgehen können. Darüber hinaus können die TiC-Partikel beim Kaltwalzen und Kaltumformen zerstört werden. Dabei entstehen zwischen den zerstörten Partikeln Kavitäten, die wiederum als Startpunkt für Risse dienen können. Schließlich können oberflächennahe, grobe TiC-Partikel beim Kaltwalzen und Kaltumformen zu Fehlstellen an der Oberfläche führen. Daher sieht die Erfindung vor, den Ti-Gehalt, sofern überhaupt vorhanden, unterhalb einer Obergrenze von 0,5 Gew.-% zu halten. Sollen erfindungsgemäße Stähle mit optimierten Eigenschaftskombinationen erzeugt werden, kann dies dadurch erreicht werden, dass der Ti-Gehalt des erfindungsgemäßen Stahls auf Werte reduziert wird, in denen Ti keine Wirkung mehr entfaltet und der noch vorhandene Ti-Gehalt den unvermeidbaren Verunreinigungen zuzurechnen ist.

Die in erfindungsgemäßem Stahl gegebenenfalls vorhandenen Nb- und Ti-Gehalte führen schon beim Warmwalzen zu Nb- und Ti-Ausscheidungen und erhöhen so den Walzwiderstand beim Warm- und Kaltwalzen. Dies kann sich insbesondere beim Warmwalzen als ungünstig erweisen, da bereits die erfindungsgemäß vorgeschriebenen vergleichbar hohen Al- und Si-Gehalte einen erhöhten Warmwalzwiderstand nach sich ziehen. Demgegenüber entstehen die feinen Vanadium-Ausscheidungen erst bei der Schlussglühung des fertig gewalzten Blechs und behindern daher das Warm- und Kaltwalzen nicht. In Fällen, in denen es sich als schwierig erweist, erfindungsgemäßen Stahl warm- oder kaltzuwalzen, kann es auch aus diesem Grund günstig sein, den Vanadium-Gehalt des Stahls in Relation zum Nb-Gehalt zu erhöhen bzw. zu Gunsten eines hohen Vanadium-Gehalts auf die Zugabe von Niob und/oder Titan zu verzichten.

Nb, V und Ti haben alle einen Einfluss auf die verzögerte Rissbildung. Wie an sich bekannt, bilden diese drei Elemente Ausscheidungen, an denen der Wasserstoff "getrappt" (d.h. festgehalten) und unschädlich gemacht wird.

Erst durch die erfindungsgemäße Zugabe von Nb und/oder V kann jedoch bei einem hoch-manganhaltigen Stahl ein sehr feinkörniges Gefüge (ASTM 13, insbesondere ASTM 14 und feiner) sicher erreicht werden.

Schwefel und Phosphor gelangen im Zuge des Erschmelzungsprozesses unvermeidbar in den erfindungsgemäßen Stahl, können jedoch zu einer Versprödung an den Korngrenzen führen. Insbesondere im Hinblick auf eine ausreichende Warmverformbarkeit ist daher bei erfindungsgemäßem Stahl der S-Gehalt auf weniger als 0,03 Gew.-% und der P-Gehalt auf weniger als 0,08 Gew.-% beschränkt.

Stickstoff in Gehalten von bis zu 0,1 Gew.-% ist zur Bildung von Karbonitriden notwendig. Bei N-Mangel bilden sich C-reiche und N-arme Karbonitride. Der N-Gehalt sollte dennoch gering eingestellt werden. Al und N bilden Ausscheidungen, die die mechanischen Eigenschaften, insbesondere die Dehnwerte, deutlich verschlechtern können. Auch durch eine nachträgliche Wärmebehandlung können die AlN -Ausscheidungen nicht mehr aufgelöst werden. Aus diesem Grund ist der maximale Gehalt an Stickstoff in erfindungsgemäßem Stahl auf weniger als 0,1 Gew.-% beschränkt, wobei sich eine optimale Wirkung des Stickstoffs in erfindungsgemäßem Stahl einstellt, wenn dessen N-Gehalt auf 0,0030 - 0,0250 Gew.-%, insbesondere 0,005 - 0,0170 Gew.-%, beschränkt ist.

Mo in wirksamen Gehalten unterhalb von 2 Gew.-% trägt ebenfalls zur Verbesserung der Korrosionsbeständigkeit und damit einhergehend zu einer weiteren Verminderung des Risikos der verzögerten Rissbildung bei. Mo bildet wie Cr zusätzlich mit dem im Stahl vorhandenen Kohlenstoff und Stickstoff Ausscheidungen, die durch die Anlagerung von Wasserstoff der verzögerten Rissbildung entgegenwirken.

Bor substituiert in seiner Wirkung auf die mechanischtechnologischen Eigenschaften das Legierungselement Mn. So ist festgestellt worden, dass ein Stahl mit einem Mn-Gehalt von 20 Gew.-% und 0,003 % Bor ein ähnliches Eigenschaftsprofil aufweist wie ein Stahl, der 25 % Mn, jedoch kein B enthält. Daher erlaubt die Zugabe von bis zu 0,01 Gew.-% Bor zu einer erfindungsgemäßen Stahllegierung bei unverändert hohen Festigkeiten verminderte Mn-Gehalte, die im Hinblick auf die Vermeidung von verzögerter Rissbildung und Lotrissigkeit günstig sind. Daneben wirken sich geringe Gehalte an Bor positiv auf die Bandkantenqualität des aus einem erfindungsgemäßen Stahl erzeugten Warmbands aus. Risse und Instabilitäten im Bandkantenbereich, wie sie von Al- und Si-legierten hochmanganhaltigen Stählen bekannt sind, werden auf diese Weise unterdrückt.

Auch durch die Zugabe von Kupfer in unterhalb von 5 Gew.-%, insbesondere unterhalb von 3 Gew.-%, liegenden Gehalten kann die Härte eines erfindungsgemäßen Stahls durch die Bildung von Ausscheidungen gesteigert werden. Über 5 Gew.-% hinausgehende Gehalte an Cu können jedoch Oberflächenfehler verursachen, die beispielsweise aus erfindungsgemäßem Stahl gefertigte Flachprodukte (Band, Blech) unbrauchbar machen können.

Im Ergebnis steht mit der Erfindung somit ein Stahl zur Verfügung, der nicht nur eine hohe Festigkeit von mindestens 800 MPa und mehr besitzt, sondern bei dem auch ein großer Widerstand gegen verzögerte Rissbildung mit einem hohen Widerstand gegen "Lotrissigkeit" kombiniert sind.

Erfindungsgemäßer Stahl eignet sich hervorragend zur Verarbeitung zu Stahlflachprodukten, wie Stahlblechen oder Stahlbändern, die anschließend einer Warm- oder Kaltverformung zu Bauteilen unterzogen werden sollen.

Um die erfindungsgemäßen Stahlflachprodukte vor Oberflächenkorrosion zu schützen, können diese mindestens auf ihrer im praktischen Einsatz einem korrosiven Angriff ausgesetzten Fläche mit einer metallischen Schutzbeschichtung überzogen sein. Bei dieser Schutzbeschichtung kann es sich in an sich bekannter Weise um eine Al- oder Zn-basierte Schicht handeln, die beispielsweise durch elektrolytisches Verzinken, durch Feuerverzinken, durch nachgeglühte oder galvanealed Beschichtungen, ZnNi-Beschichtungen oder durch Feueraluminieren auf das erfindungsgemäße Flachprodukt aufgebracht wird, wobei sich insbesondere durch das elektrolytische Verzinken gute Beschichtungsergebnisse erzielen lassen.

Erfindungsgemäß hergestellte Stahlflachprodukte zeichnen sich allgemein durch ein besonders hohes Energieabsorptionsvermögen bei plötzlich auftretender Belastung aus.

Aufgrund ihres besonderen Eigenschaftsspektrums sind in erfindungsgemäßer Weise erzeugte Stahlflachprodukte besonders gut für die Herstellung von Karosseriebauteilen geeignet. Aufgrund seiner außergewöhnlich hohen Festigkeit und Dehnbarkeit ist erfindungsgemäß zusammengesetztes und erzeugtes Material besonders für tragende und crashrelevante Bauteile von Fahrzeugkarosserien geeignet. So lassen sich aus erfindungsgemäßen Stahlflachprodukten Strukturbauteile herstellen, bei denen eine hohe Tragfähigkeit mit einem hohen Schutz und einem geringen Gewicht kombiniert sind.

Wegen ihres hohen Energieaufnahmevermögens eignen sich erfindungsgemäße Stahlflachprodukte auch für die Herstellung von Panzerungen oder Teilen für den Personenschutz. Insbesondere lassen sich aus erfindungsgemäßen Stahlflachprodukten direkt am Körper getragene Elemente herstellen, die zum Schutz gegen Beschuss oder vergleichbare impulsförmig auftretende Angriffe dienen.

Aufgrund ihres verminderten Gewichts bei gleichzeitig guter Verformbarkeit und Festigkeit sind erfindungsgemäße Stahlflachprodukte darüber hinaus besonders zur Verarbeitung zu Rädern für Fahrzeuge, insbesondere Kraftfahrzeuge, geeignet.

Auch lassen sich aus erfindungsgemäß beschaffenen Stahlflachprodukten Bauteile erzeugen, die im Bereich der Tieftemperaturtechnik eingesetzt werden. Das günstige Eigenschaftsspektrum erfindungsgemäß erzeugter Kaltbandprodukte bleibt auch bei niedrigen, im Bereich der Kryotechnik üblichen Temperaturen erhalten.

Denkbar ist darüber hinaus eine Verwendung erfindungsgemäßer Stahlbleche zur Herstellung von Rohren, die insbesondere für die Herstellung von hochfesten Motorteilen, wie Nockenwellen oder Kolbenstangen, bestimmt sind.

Erfindungsgemäße Stahlfachprodukte können auf unterschiedliche Weise hergestellt werden. Denkbar ist eine Herstellung über ein konventionelles Konverterstahlwerk oder einen ELO-Ofen mit anschließendem Vergießen im Strangguss-, Bandgieß- oder DSC-Verfahren und einem auf das Vergießen folgenden, inline oder offline durchgeführten Warmwalzen. Die auf diesen Wegen erhaltenen Warmbänder können erforderlichenfalls in einer Tandemstraße, einem Reversiergerüst oder einem Sendzimir-Gerüst zu Kaltband kaltgewalzt werden.

Eine Ca-Behandlung verbessert die Vergießbarkeit besonders bei hoch Al-haltigen erfindungsgemäßen Analysen. Ca bildet gemeinsam mit Tonerde (Al₂0₃) Calciumaluminate, die in die Schlacke aufgenommen werden und somit die Tonerde unschädlich machen. Auf diese Weise wird der Gefahr entgegengewirkt, dass Tonerde zu Cloggings (Anlagerungen im Tauchrohr) führt, welche die Vergießbarkeit beeinträchtigen. Dementsprechend sind in erfindungsgemäßem Stahl Ca-Gehalte von bis zu 0,015 Gew.-%, insbesondere bis zu 0,01 Gew.-% zugelassen, wobei die vorteilhaften Effekte der optional durchgeführten Ca-Behandlung sich typischerweise in Ca-Gehalten von mindestens 0,0015 Gew.-% äußern.

Das aus erfindungsgemäßem Stahl erzeugte Warmband kann optional gebeizt und ebenso optional in an sich bekannter Weise oberflächenbeschichtet werden. Eine gesonderte Wärmebehandlung der Zinkschicht nach Aufbringen ist zusätzlich möglich.

Alternativ kann das Warmband im gebeizten Zustand kaltgewalzt werden, durch einen im kontinuierlichen Durchlauf absolvierten Glühprozess schlussgeglüht und anschließend optional oberflächenbeschichtet (Z, ZE, ZF, ZMg, ZN, ZA, AS, S, Dünnfilm, etc.) werden. Eine gesonderte Wärmebehandlung nach Aufbringen der Zinkschicht ist auch hier zusätzlich möglich.

Erfindungsgemäßes Warmband oder Kaltband kann anschließend mit einer speziellen Beschichtung versehen werden, die einen Einsatz in Warm- oder Halbwarmumformverfahren ermöglicht.

Der hohe Widerstand erfindungsgemäßer Stahlflachprodukte gegen verzögerte Rissbildung kann durch eine thermische Nachbehandlung weiter verbessert werden. Bei dieser Nachbehandlung wird zinkbeschichtetes Material so behandelt, dass ein Legieren der Zinkschicht mit dem Grundwerkstoff einsetzt. So behandeltes Material zeigt verzögerte Rissbildung erst nach erheblich verlängerten Beobachtungszeiträumen oder sogar keinerlei Rissbildung mehr.

Eine typische Variante eines zur Herstellung von erfindungsgemäßen Stahlflachprodukten geeigneten Verfahrens umfasst die folgenden Arbeitsschritte:
- Aus einem erfindungsgemäß beschaffenen Stahl wird ein Vormaterial in Form von Brammen oder Dünnbrammen gegossen.
- Ist insbesondere bei der Verwendung von Brammen eine Wiedererwärmung vor dem nachfolgend durchgeführten Warmwalzen erforderlich, so sollte die Wiedererwärmungstemperatur nicht unter 1100 °C liegen, insbesondere mehr als 1150 °C betragen. In solchen Fällen, in denen das Vormaterial in einem kontinuierlichen Arbeitsablauf nach dem Gießen direkt dem Warmwalzen zugeführt werden kann (z. B. in einer Gießwalzanlage, in der Dünnbrammen in kontinuierlich aufeinanderfolgenden Arbeitsschritten gegossen und zu Warmband verarbeitet werden), kann dies auch ohne zwischengeschaltete Wiedererwärmung im Direkteinsatz unter Ausnutzung der Gießhitze erfolgen. Die Stichabnahme während des Warmwalzens sollte pro Stich jeweils mindestens 10 % betragen, um unter praxisgerechten Produktionsbedingungen ein warmgewalztes erfindungsgemäßes Stahlflachprodukt mit optimaler Beschaffenheit seines Gefüges zu erhalten.
- Nach dem erforderlichenfalls durchgeführten Erwärmen wird das Vormaterial bei einer mindestens 800 °C betragenden Warmwalzendtemperatur zu einem Warmband warmgewalzt.
- Danach wird das erhaltene Warmband bei einer maximal 700 °C betragenden Haspeltemperatur zu einem Coil gewickelt.

Indem das Warmwalzen bei einer mindestens 800 °C betragenden Temperatur beendet wird und bei vergleichbar niedrigen Temperaturen gehaspelt wird, wird die positive Wirkung des in erfindungsgemäßem Stahl vorhandenen Kohlenstoffs und, sofern es anwesend ist, insbesondere des Bors im vollen Umfang genutzt. So bewirken Bor und Kohlenstoff bei in diesem Bereich warmgewalzten Blechen höhere Zugfestigkeits- und Streckgrenzen-Werte bei nach wie vor akzeptablen Bruchdehnungswerten. Mit zunehmender Warmwalzendtemperatur nehmen Zugfestigkeit und Streckgrenze des Warmbands ab, während die Dehnungswerte ansteigen. Durch Variation der Walzendtemperaturen im durch die Erfindung vorgegebenen Rahmen lassen sich so die gewünschten Eigenschaften des erhaltenen Warmstahlflachproduktes gezielt und auf einfache Weise beeinflussen.

Im erfindungsgemäß erzeugten Warmband liegen die Gehalte an V zu mindestens 80 %, insbesondere 90 % und mehr, und an Nb zu mindestens 50 %, insbesondere 60 % und mehr, in gelöster Form vor. Die restlichen Gehalte an V oder Nb sind als Ausscheidungen vorhanden, wobei die Menge der in den Ausscheidungen gebundenen Gehalte an Nb und V möglichst gering sein soll. Durch den hohen Anteil an gelöstem Nb oder V im Warmband lässt sich das angestrebte sehr feine Gefüge beim anschließenden Kaltwalzen und einer zusätzlich durchgeführten Glühbehandlung betriebssicher erzeugen. Der Ti-Gehalt liegt dagegen nach dem Warmwalzen zu 60 - 100 % als TiC-Ausscheidungen vor. Diese Karbidausscheidungen behindern nicht nur das Kaltwalzen, sondern führen bei einer abschließenden Glühung auch zur Entstehung grober Ausscheidungen. Diese bilden bei der Umformung eines mit größeren Mengen an Ti legierten Stahls den Ursprung von Rissen, die das jeweilige Bauteil unbrauchbar machen.

Besonders günstige mechanische Eigenschaften des erfindungsgemäß erzeugten Warmbands, insbesondere hohe Streckgrenzen, ergeben sich dann, wenn besonders niedrige, insbesondere bis zur Raumtemperatur (ca. 20 °C) reichende Haspeltemperaturen eingestellt werden. Durch die Beschränkung der Haspeltemperatur auf Werte von maximal 700 °C, insbesondere weniger als 700 °C, insbesondere weniger als 500 °C oder Raumtemperatur wird in an sich bekannter Weise das Risiko einer Korngrenzoxidation minimiert. Korngrenzoxidation kann Materialabplatzungen nach sich ziehen und als solche die Weiterverarbeitung erschweren oder sogar unmöglich machen.

Das nach dem Haspeln erhaltene Warmband kann unmittelbar zu einem Bauteil kalt- oder warmverformt werden.

Jedoch eignet sich erfindungsgemäßes Warmband insbesondere auch zur Weiterverarbeitung zu Kaltband. Dazu lässt sich das Warmband nach dem Haspeln und einer erforderlichenfalls durchgeführten Oberflächenreinigung durch Beizen in an sich bekannter Weise zu Kaltband kaltwalzen. Bevorzugt liegt der bei einem solchen Kaltwalzen erzielte Kaltwalzgrad im Bereich von 30 % bis 75 %, um die optimierten Verformungs- und Festigkeitseigenschaften des fertigen erfindungsgemäßen Stahlflachprodukts sicher zu erreichen.

An das Kaltwalzen kann sich eine Schlussglühung anschließen, deren Glühtemperaturen bevorzugt maximal 880 °C betragen, insbesondere unter 800 °C liegen. Durch die Wahl der Glühtemperatur wird die Bildung eines besonders feinen Gefüges gesichert, dessen Feinkörnigkeit regelmäßig mindestens ASTM 14 und feiner entspricht. Die Erfindung nutzt hier, dass die erfindungsgemäß vorgesehenen, im Warmband zum weitaus größten Teil noch im gelösten Zustand vorliegenden Gehalte an Nb und V bei der Schlussglühung feine Ausscheidungen bilden (VCN, NbCN usw.), die ein Kornwachstum beim abschließenden Glühprozess weitgehend verhindern. Durch eine möglichst niedrige Glühtemperatur wird ein besonders feines Gefüge hergestellt. Nach der Schlussglühung weist das erhaltene Band die angestrebte Feinkörnigkeit des Gefüges dementsprechend sicher auf. Die Schlussglühung kann dabei im Durchlauf in einem Durchlaufglühofen durchgeführt werden.

Nach dem Kaltwalzen und dem Schlussglühen kann das erhaltene Kaltband noch einem Dressierwalzen unterzogen werden, um seine Maßhaltigkeit und seine mechanischen Eigenschaften weiter zu verbessern.

Wie bereits erwähnt, kann das als Warm- oder Kaltband für die Weiterverformung zu einem Bauteil bereitgestellte, erfindungsgemäße Stahlflachprodukt zum Schutz vor Oberflächenkorrosion mit einer metallischen Schutzschicht versehen werden. Dazu können im Fall, dass das Stahlflachprodukt als Warmband unmittelbar zu einem Bauteil verformt wird, das jeweils erhaltene Warmband oder das nach einem Kaltwalzen des Warmbands erhaltene Kaltband beispielsweise feueraluminiert, feuerverzinkt oder elektrolytisch verzinkt werden.

Zuvor wird erforderlichenfalls eine Reinigung und Vorbereitung der Bandoberfläche durch Beizen durchgeführt.

Soll das Stahlflachprodukt im blanken Zustand ausgeliefert werden, kann es an Stelle einer metallischen Beschichtung zum temporären Schutz vor Oberflächenkorrosion eingeölt werden.

In Tabelle 1 sind die Legierungen von den erfindungsgemäßen Stählen E1, E2, E4, E5, E7, von den nicht erfindungsgemäßen Stählen E3, E6, E8 sowie von vierzehn Vergleichsstählen V1 - V14 angegeben.

Aus den erfindungsgemäßen Stählen E1, E2, E4, E5, E7, den nicht erfindungsgemäßen Stählen E3, E6, E8 und den Vergleichsstählen V1 - V14 sind Gussblöcke hergestellt, jeweils auf eine Vorwärmtemperatur von ca. 1250 °C erwärmt und bei einer Warmwalzendtemperatur von ca. 950 °C zu jeweils einem ca. 3 mm dicken Warmband warmgewalzt worden.

Das jeweils erhaltene Warmband ist bei einer Haspeltemperatur von ca. 20 °C (Raumtemperatur) zu einem Coil gehaspelt worden.

Nach dem Haspeln sind die Warmbänder mit einem Kaltwalzgrad von jeweils ca. 66 % zu Kaltband mit einer Dicke von ca. 1 mm kaltgewalzt worden.

Die so erhaltenen Kaltbänder sind schließlich einer im kontinuierlichen Durchlauf durchgeführten Schlussglühung unterzogen worden, bei der sie über eine Dauer von ca. 140 s auf eine Temperatur T_{Glüh} erwärmt worden sind, die unterhalb von 890 °C lag. Die mechanischen Eigenschaften, die jeweils eingestellte Schlussglühtemperatur T_{Glüh} sowie die Korngröße des Gefüges sind für die aus den erfindungsgemäßen Stählen E1, E2, E4, E5, E7, den nicht erfindungsgemäßen Stählen E3, E6, E8 und den Vergleichsstählen V1 - V12 in Tabelle 2 angegeben.

Aus den Stahlflachprodukten sind Näpfchen mit einem Ronden/Näpfchdurchmesser-Verhältnis ß = 2,0 (Ziehverhältnis) gezogen worden. Die Näpfchen sind einem Korrosionstest unterzogen worden, bei dem sie ohne Korrosionsschutzbeschichtung einer 5 % NaCl-Lösung ausgesetzt worden sind. Die dabei bis zum ersten Einsetzen von verzögerter Rissbildung an einem Näpfchen von einem Kollektiv von vier Näpfchen vergangenen Tage sind in der Spalte "Näpfchenhaltezeit" der Tabelle 2 angegeben.

Mit den aus den erfindungsgemäßen Stählen E1, E2, E4, E5, E7, den nicht erfindungsgemäßen Stählen E3, E6, E8 und den Vergleichsstählen V1 - V12 erzeugten Stahlblechproben sind anschließend Fügeversuche gemacht worden, bei denen sie gegen einen konventionellen, verzinkten Tiefziehstahl ("heterogene Schweißung") überlappend punktverschweißt worden sind. Der jeweils erzielte Arbeitsbereich, angegeben in Kilo-Ampere kA, sowie die beobachtete maximale Risslänge im Bereich der Schweißzone sowie eine Beurteilung der Neigung zur Lotrissigkeit sind in Tabelle 2 ebenfalls angegeben.

Unter dem "Arbeitsbereich" einer Punktschweißung wird hier die Differenz zwischen der für die Erzeugung einer Schweißlinse benötigten Mindeststromstärke Imin und der maximalen Stromstärke Imax verstanden, bei deren Überschreiten die Gefahr besteht, dass Material des zu verschweißenden Substrats beim Schweißvorgang oberflächig wegspritzt (Arbeitsbereich A = Imax - Imin). Ein solches Wegspritzen soll vermieden werden, da es zu schlechteren Schweißverbindungen führt. Je kleiner der Arbeitsbereich, desto genauer muss der Schweißprozess geführt werden. Je größer der Arbeitsbereich, desto einfacher und zuverlässiger lässt sich eine Schweißung unter den in der betrieblichen Praxis herrschenden Bedingungen herstellen. Um eine praxisgerechte Verarbeitung sicherzustellen, werden daher beispielsweise im Bereich der Automobilherstellung für Stahlmaterialien, die verschweißt werden sollen, Arbeitsbereiche A mindestens 0,8 kA, insbesondere mindestens 1,0 kA, gefordert.

Zusätzlich ist unter Laborbedingungen die betriebliche Erzeugung einer erfindungsgemäßen Legierung E9 simuliert worden, die neben Eisen und unvermeidbaren Verunreinigungen (in Gew.-%) 19 % Mn, 0,4 % C, 1,4 % Al, 0,45 % Si, 2 % Cr und 0,12 % V enthielt. Die aus diesem Stahl erzeugten, kaltgewalzten und mit einer Zinkbeschichtung versehenen Stahlblechproben sind einer Schlussglühung mit Schlussglühtemperaturen T_{Glüh} von weniger als 800 °C im Kontiglühprozess unterzogen worden. Nach dieser Schlussglühung hatten die Stahlblechproben ein Gefüge mit extrem feiner Korngröße. Sie zeigten einen extrem hohen Widerstand gegen eine durch Wasserstoff-induzierte Rissbildung im Näpfchentest. Die Stahlblechproben wiesen eine Streckgrenze Rp von 560 MPa, eine Zugfestigkeit Rm von 900 MPa, eine Bruchdehnung A von 45 % und einen n-Wert von 0,35 auf. Aus den Stahlblechproben gezogene verzinkte Näpfchen (β = 2,0) blieben in 5 % NaCl-Lösung über einen Zeitraum von drei Monaten rissfrei.

Anschließend ist ebenfalls unter Laborbedingungen eine erfindungsgemäße Legierung E10 erschmolzen worden, die wie die voranstehend beschriebene Legierung E9 neben Eisen und unvermeidbaren Verunreinigungen (in Gew.-%) 19 % Mn, 0,4 % C, 1,4 % Al, 0,45 % Si, 2 % Cr und 0,12 % V enthielt. Zusätzlich wurden der Legierung E10 noch 0,003 Gew.-% Bor zugegeben. Es zeigte sich, dass die erhaltenen Stahlblechproben bei gleicher Herstellroute vergleichbare Streckgrenzen, jedoch eine erhöhte Bruchdehnungen aufwiesen.

In einem weiteren Versuch ist eine gemäß der nicht erfindungsgemäßen Legierung E8 zusammengesetzte Stahlschmelze einer Ca-Behandlung unterzogen worden. Die Ca-Behandlung ergab eine gute Vergießbarkeit trotz der hohen Al-Gehalte und Eigenschaften, die den Ca-freien Stählen entsprachen.

Zum Nachweis dafür, dass der hohe Widerstand gegen verzögerte Rissbildung bei aus einer erfindungsgemäßen Legierung bestehenden verzinkten Stahlflachprodukten durch eine thermische Nachbehandlung weiter verbessert werden kann, sind aus der erfindungsgemäßen Legierung E2 kaltgewalzte Stahlblechproben erzeugt worden, die mit einer Zinkbeschichtung versehen worden sind. Die Proben sind dann einer thermischen Nachbehandlung unterzogen worden, bei der das zinkbeschichtete Material so erwärmt worden ist, dass ein Legieren der Zinkschicht mit dem Grundwerkstoff einsetzte. Aus dem so behandelten Material gezogene Näpfchen zeigten eine deutlich verzögerte Rissbildung nach erheblich verlängerten Beobachtungszeiträumen bzw. eine Rissbildung blieb bei ihnen vollständig aus. Die Ergebnisse der Untersuchungen sind in Tabelle 3 dargestellt.

Die Versuche haben ergeben, dass die deutliche Minimierung der Anfälligkeit für verzögerte Rissbildung dann erreicht wird, wenn die erfindungsgemäß zusammengesetzten und verzinkten Proben bei Temperaturen von 100 bis 450 °C über eine Dauer von 1 bis 200 Stunden, bevorzugt 24 - 48 h haubengeglüht oder in einer Durchlaufglühanlage bei Temperaturen von 400 bis 600 °C für 1 bis 500 s, insbesondere 5 - 300 s, wärmebehandelt werden.

Der Widerstand erfindungsgemäßer Stähle gegen Lotrissigkeit beim Schweißen ist aufgrund der durch die Zugabe von V und/oder Nb erzielten sehr feinen Mikrostruktur und der in den erfindungsgemäß vorgegebenen Grenzen erfolgenden Teilsubstitution von Al oder Si durch Cr gegenüber dem Stand der Technik deutlich verbessert. Bei den Schweißversuchen mit erfindungsgemäß zusammengesetzten Stahlblechproben wurden keine makroskopischen Risse beim Widerstandspunktschweißen festgestellt.

**Tabelle 1**

| | **C** | **Mn** | **Al** | **Si** | **Cr** | **P** | **S** | **N** | **V** | **Nb** | **Ti** | **B** | **Cu** | **Ni** | **Ca** |
|---|---|---|---|---|---|---|---|---|---|---|---|---|---|---|---|
| **E1** | 0,418 | 19,3 | 0,52 | 0,48 | 1,85 | 0,004 | 0,007 | 0,0082 | 0,12 | <0,001 | <0,001 | <0,001 | <0,01 | <0,05 | <0,01 |
| **E2** | 0,402 | 18,8 | 1,26 | 0,22 | 2,32 | 0,003 | 0,005 | 0,0046 | <0,001 | 0,05 | <0,001 | <0,001 | <0,01 | <0,05 | <0,01 |
| **E3** | 0,389 | 18,8 | 1,16 | 0,21 | 2,91 | 0,003 | 0,006 | 0,0044 | <0,001 | 0,08 | <0,001 | <0,001 | <0,01 | <0,05 | <0,01 |
| **E4** | 0,402 | 19,2 | 1,04 | 0,27 | 2,08 | 0,004 | 0,006 | 0,0042 | <0,001 | 0,05 | 0,03 | <0,001 | <0,01 | <0,05 | <0,01 |
| **E5** | 0,398 | 19,3 | 1,08 | 0,22 | 1,95 | 0,005 | 0,005 | 0,0036 | 0,12 | <0,001 | <0,001 | <0,001 | 0,53 | <0,05 | <0,01 |
| **E6** | 0,394 | 18,7 | 1,03 | 0,18 | 2,04 | 0,005 | 0,006 | 0,0044 | 0,12 | <0,001 | <0,001 | <0,001 | <0,01 | 0,42 | <0,01 |
| **E7** | 0,382 | 18,7 | 0,65 | 0,30 | 1,96 | 0,005 | 0,008 | 0,0072 | <0,001 | 0,08 | <0,001 | 0,003 | <0,01 | <0,05 | <0,01 |
| **E8** | 0,208 | 22,3 | 1,54 | 0,02 | 2,89 | 0,005 | 0,007 | 0,0062 | <0,001 | 0,08 | <0,001 | <0,001 | <0,01 | <0,05 | <0,01 |
| **V1** | 0,592 | 22,5 | <0,01 | 0,17 | 0,27 | 0,043 | 0,007 | 0,0058 | 0,2 | <0,001 | <0,001 | <0,001 | 0,110 | 0,20 | <0,01 |
| **V2** | 0,587 | 18,2 | 1,46 | 0,20 | 0,031 | 0,006 | 0,006 | 0,0026 | <0,001 | <0,001 | <0,001 | <0,001 | <0,01 | <0,05 | <0,01 |
| **V3** | 0,056 | 25,5 | 0,85 | 0,90 | 0,028 | 0,004 | 0,005 | 0,0020 | <0,001 | <0,001 | <0,001 | <0,001 | <0,01 | <0,05 | <0,01 |
| **V4** | 0,062 | 25,4 | 1,80 | 1,75 | 0,024 | 0,003 | 0,005 | 0,0028 | <0,001 | <0,001 | <0,001 | <0,001 | <0,01 | <0,05 | <0,01 |
| **V5** | 0,064 | 25,3 | 2,66 | 2,70 | 0,024 | 0,003 | 0,005 | 0,0034 | <0,001 | <0,001 | <0,001 | <0,001 | <0,01 | <0,05 | <0,01 |
| **V6** | 0,085 | 25,1 | 2,61 | 2,72 | 0,034 | 0,003 | 0,005 | 0,0038 | 0,20 | <0,001 | <0,001 | <0,001 | <0 01 | <0,05 | <0,01 |
| **V7** | 0,193 | 22,3 | 2,65 | 0,21 | 0,020 | 0,038 | 0,012 | 0,0060 | 0,20 | <0,003 | <0,001 | <0,001 | <0,01 | <0,05 | <0,01 |
| **V8** | 0,404 | 18,4 | 1,52 | 1,54 | 0,032 | 0,003 | 0,007 | 0,0042 | 0,12 | <0,001 | <0,001 | <0,001 | <0,01 | <0,05 | <0,01 |
| **V9** | 0,415 | 19,1 | 1,18 | 0,32 | 0,025 | 0,005 | 0,005 | 0,0050 | 0,12 | <0,001 | <0,001 | <0,001 | <0,01 | <0,05 | <0,01 |
| **V10** | 0,402 | 18,8 | 1,05 | 0,32 | 1,02 | 0,003 | 0,005 | 0,0046 | 0,12 | <0,001 | <0,001 | <0,001 | <0,01 | <0,05 | <0,01 |
| **V11** | 0,211 | 21,8 | 1,45 | 0,02 | 2,98 | 0,005 | 0,007 | 0,0044 | <0,001 | <0,001 | <0,001 | <0,001 | <0,01 | <0,05 | <0,01 |
| **V12** | 0,42 | 19,4 | 1,48 | 0,69 | 3,95 | 0,003 | 0,008 | 0,0052 | <0,001 | 0,07 | <0,001 | <0,001 | <0,001 | <0,001 | <0,01 |
| **V13** | 0,08 | 25,0 | 3,72 | 0,11 | 0,031 | 0,003 | 0,006 | 0,0048 | 0,28 | < 0,001 | 0,13 | <0,001 | <0,01 | <0,05 | <0,01 |
| **V14** | 0,47 | 27,2 | 1,12 | 0,09 | 0,042 | 0,004 | 0,007 | 0,0064 | <0,001 | <0,001 | <0,001 | <0,001 | <0,01 | <0,05 | <0,01 |

| | | | | | | | | | | | | | | | |
|---|---|---|---|---|---|---|---|---|---|---|---|---|---|---|---|
| Laborerzeugungen, Angaben in Gew.-%, Rest Eisen und unvermeidbare Verunreinigungen | | | | | | | | | | | | | | | |

**Tabelle 2**

| | Streckgrenze Rp | Zugfestigkeit Rm | Bruchdehnung A | T_{Glüh} | Korngröße nach ASTM | Näpfchenhaltezeit ¹) | Fügeeigenschaften Kaltband, verzinkt | | |
|---|---|---|---|---|---|---|---|---|---|
| | | | | | | | Arbeitsbereich Punktschweißen | maximale Risslänge in Fügeebene | Neigung zu Lotrissigkeit |
| | [MPa] | [MPa] | [%] | [°C] | | [Tage] | [kA] | [µm] | |
| **E1** | 503 | 912 | 46 | 800 | 14 | 24 | 1,3 | 0 | NEIN |
| **E2** | 538 | 932 | 45 | 850 | 14 | 33 | 1,2 | 0 | NEIN |
| **E3** | 504 | 928 | 44 | 880 | 14 | 32 | 1,1 | 0 | NEIN |
| **E4** | 520 | 920 | 47 | 830 | 14 | 36 | 1,3 | 0 | NEIN |
| **E5** | 530 | 950 | 49 | 750 | 14 | 28 | 1,2 | 0 | NEIN |
| **E6** | 510 | 900 | 52 | 750 | 14 | 30 | 1,3 | 0 | NEIN |
| **E7** | 550 | 920 | 48 | 830 | 14 | 34 | 1,3 | 0 | NEIN |
| **E8** | 540 | 810 | 42 | 800 | 15 | 37 | 1,1 | 0 | NEIN |
| **V1** | 660 | 980 | 46 | 750 | 14 | 2 | 1,7 | 0 | NEIN |
| **V2** | 448 | 862 | 50 | 800 | 12 | 19 | 1,5 | 100 | JA |
| **V3** | 342 | 698 | 47 | 835 | 12 | 17 | 1,4 | 100 | JA |
| **V4** | 378 | 699 | 53 | 835 | 12 | >50 | 0,7 | 250 | JA |
| **V5** | 437 | 741 | 52 | 835 | 12 | >50 | 0 | 300 | JA |
| **V6** | 458 | 741 | 50 | 835 | 15 | >50 | 0 | 0 | NEIN |
| **V7** | 460 | 690 | 39 | 750 | 15 | >50 | 0,6 | 0 | NEIN |
| **V8** | 631 | 994 | 44 | 750 | 15 | 45 | 0,6 | 0 | NEIN |
| **V9** | 540 | 950 | 43 | 750 | 15 | 9 | 1,5 | 0 | NEIN |
| **V10** | 550 | 960 | 43 | 750 | 15 | 10 | 1,5 | 0 | NEIN |
| **V11** | 370 | 720 | 50 | 800 | 12 | 27 | 1,1 | 130 | JA |
| **V12** | 509 | 923 | 49 | 900 | 14 | 24 | 0,6 | 0 | NEIN |
| **V13** | 443 | 772 | 47 | 800 | 14 | 32 | 0,4 | 30 | JA |
| **V14** | 421 | 820 | 47 | 800 | 12 | 7 | 1,3 | 80 | JA |

| | | | | | | | | | |
|---|---|---|---|---|---|---|---|---|---|
| ¹) Näpfchen β=2,0 in 5 % NaCl-Lösung unverzinkt | | | | | | | | | |

**Tabelle 3**

| Stahl | Oberfläche | Behandlung | Näpfchenhaltezeit in 5 % NaCl-Lösung |
|---|---|---|---|
| E2 | verzinkt | - | 33 Tage |
| E2 | verzinkt | 300 °C, 36 h | Unbegrenzt ²) |
| E2 | verzinkt | 500 °C, 20 s | Unbegrenzt ²) |

| | | | |
|---|---|---|---|
| ²) Versuche nach 180 Tagen abgebrochen | | | |

## Patentansprüche

1. Höherfester, kaltumformbarer Stahl enthaltend (in Gew.-%)
C: 0,3 - 0,5 %,
Mn: 17 - 22 %,
Si: 0,2 - 0,5 %,
Al: 0,3 - 2 %,
Cr: 1, 5 - 2,5 %,
S: < 0,03 %,
P: < 0,08 %,
N: < 0,1 %,
Mo: < 2 %,
B: < 0,01 %,
Cu: < 5 %,
Ca: bis zu 0,015 %,
mindestens ein Element aus der Gruppe "V,Nb" nach folgender Maßgabe:
Nb: 0,01 - 0,5 %,
V: 0,01 - 0,5 %
sowie optional
Ti: 0,01 - 0,5 %
und als Rest Eisen und unvermeidbare,
herstellungsbedingte Verunreinigungen.

2. Stahl nach Anspruch 1, **dadurch gekennzeichnet, dass** sein Al-Gehalt 0,5 - 1,5 Gew.-%, insbesondere 0,5 - 1,3 Gew.-%, beträgt.

3. Stahl nach einem der voranstehenden Ansprüche,
**dadurch gekennzeichnet, dass** sein Cr-Gehalt mindestens 1,7 Gew.-%, insbesondere mindestens 1,8 Gew.-%, beträgt.

4. Stahl nach einem der voranstehenden Ansprüche,
**dadurch gekennzeichnet, dass** sein Cr-Gehalt höchstens 2,2 Gew.-% beträgt.

5. Stahl nach einem der voranstehenden Ansprüche,
**dadurch gekennzeichnet, dass** sein N-Gehalt 0,0030 - 0,0250 Gew.-% beträgt.

6. Stahl nach einem der voranstehenden Ansprüche,
**dadurch gekennzeichnet, dass** sein Cu-Gehalt weniger als 3 Gew.-% beträgt.

7. Stahl nach einem der voranstehenden Ansprüche,
**dadurch gekennzeichnet, dass** sein Ca-Gehalt mindestens 0,0015 Gew.-% beträgt.

8. Stahl nach einem der voranstehenden Ansprüche,
**dadurch gekennzeichnet, dass** seine Zugfestigkeit mindestens 800 MPa beträgt.

9. Stahlflachprodukt hergestellt aus einem gemäß einem der Ansprüche 1 bis 8 beschaffenen Stahl.

10. Stahlflachprodukt nach Anspruch 9, **dadurch gekennzeichnet, dass** es zum Schutz vor Oberflächenkorrosion mit einer metallischen Schutzbeschichtung beschichtet ist.

11. Stahlflachprodukt nach Anspruch 10, **dadurch gekennzeichnet, dass** die metallische Schutzbeschichtung durch elektrolytisches Verzinken, durch Feuerverzinken, durch nachgeglühte oder galvanealed Beschichtungen, ZnNi-Beschichtungen oder durch Feueraluminieren gebildet ist.

## Claims

1. High-strength, cold-formable steel comprising (in % by weight)
C: 0.3 - 0.5%,
Mn: 17 - 22%,
Si: 0,2 - 0.5%,
Al: 0.3 - 2%,
Cr: 1.5 - 2.5%,
S: < 0.03%,
P: < 0.08%,
N: < 0.1%,
Mo: < 2%,
B: < 0.01%,
Cu: < 5%,
Ca: up to 0.015%,
at least one element from the group "V, Nb" with the following proviso:
Nb: 0.01 - 0.5%,
V: 0.01 - 0.5%
and optionally
Ti: 0.01 - 0.5%
and iron and unavoidable, production-related impurities as the remainder.

2. Steel according to claim 1, **characterised in that** the Al content thereof is 0.5 - 1.5% by weight, in particular 0.5 - 1.3% by weight.

3. Steel according to one of the preceding claims, **characterised in that** the Cr content thereof is at least 1.7% by weight, in particular at least 1.8% by weight.

4. Steel according to one of the preceding claims, **characterised in that** the Cr content thereof is at most 2.2% by weight.

5. Steel according to one of the preceding claims, **characterised in that** the N content thereof is 0.0030 - 0.0250% by weight.

6. Steel according to one of the preceding claims, **characterised in that** the Cu content thereof is less than 3% by weight.

7. Steel according to one of the preceding claims, **characterised in that** the Ca content thereof is at least 0.0015% by weight.

8. Steel according to one of the preceding claims, **characterised in that** the tensile strength thereof is at least 800 MPa.

9. Flat steel product produced from a steel composed according to one of claims 1 to 8.

10. Flat steel product according to claim 9, **characterised in that** it is coated with a metal protective coating in order to protect against surface corrosion.

11. Flat steel product according to claim 10, **characterised in that** the metal protective coating is formed by electrolytic galvanisation, by hot-dip galvanisation, by galvannealed coatings, ZnNi coatings or by hot-dip aluminisation.

## Revendications

1. Acier à résistance élevée, déformable à froid, contenant (en % en poids) :
C: 0,3 - 0,5 %,
Mn: 17 - 22 %,
Si: 0,2 - 0,5 %,
Al: 0,3 - 2 %,
Cr: 1,5 - 2,5 %,
S: < 0,03 %,
P: < 0,08 %,
N: < 0,1 %,
Mo: < 2 %,
B: < 0,01 %,
Cu: < 5 %
Ca: jusqu' à 0,015 %,
au moins un élément appartenant au groupe « V, Nb », selon prescription suivante :
Nb: 0,01 - 0,5 %,
V: 0,01 - 0,5 %,
ainsi qu'en option
Ti: 0,01 - 0,5 %,
le reste étant du fer et des impuretés inévitables, dues à la fabrication.

2. Acier selon la revendication 1, **caratérisé en ce que** sa teneur en Al est de 0,5 à 1,5 % en poids, en particulier de 0,5 à 1,3 % en poids.

3. Acier selon l'une des revendications précédentes,
**caratérisé en ce que** sa teneur en Cr est d'au moins 1,7 % en poids, en particulier d'au moins 1,8 % en poids.

4. Acier selon l'une des revendications précédentes,
**caratérisé en ce que** sa teneur en Cr est de 2,2 % en poids au maximum.

5. Acier selon l'une des revendications précédentes,
**caratérisé en ce que** sa teneur en N est de 0,0030 à 0,0250 % en poids.

6. Acier selon l'une des revendications précédentes,
**caratérisé en ce que** sa teneur en Cu est inférieure à 3 % en poids.

7. Acier selon l'une des revendications précédentes,
**caratérisé en ce que** sa teneur en Ca est d'au moins 0,0015 % en poids.

8. Acier selon l'une des revendications précédentes,
**caratérisé en ce que** sa résistance à la traction est d'au moins 800 MPa.

9. Produit en acier plat fabriqué à partir d'un acier constitué selon l'une des revendications 1 à 8.

10. Produit en acier plat selon la revendication 9,
**caratérisé en ce qu**'il est pourvu d'un revêtement de protection métallique, destiné à protéger la surface contre la corrosion.

11. Produit en acier plat selon la revendication 10,
**caratérisé en ce** que le revêtement protecteur, métallique est réalisé par zingage à chaud, par repassage au recuit ou par revêtement galvanisé, par revêtement ZnNi ou par revêtement d'aluminium par trempe à chaud.
